# EUROPEAN PATENT SPECIFICATION

(11) **EP 0 524 731 B1**
(45) Date of publication and mention of the grant of the patent: **13.03.2002**
(21) Application number: 92305885.3
(22) Date of filing: 25.06.1992
(51) Int. Cl.: C08L 69/00, C08L 83/10

(54) **Polymer blends of polycarbonate-polysiloxane block copolymers with polycarbonates and polyestercarbonate copolymers**
Mischungen aus Polycarbonat-Polysiloxan-Blockcopolymeren und Polycarbonaten oder Polyestercarbonatcopolymeren
Mélanges comprenant des copolymères blocs de polycarbonate-polysiloxane avec des polycarbonates ou des copolymères polyestercarbonates

(30) Priority: 01.07.1991 US 724023
(43) Date of publication of application: 27.01.1993
(73) Proprietor: GENERAL ELECTRIC COMPANY, Schenectady, NY 12345 (US)
(72) Inventor: Hoover, James Franklin, Evansville, Indiana 47712 (US)
(74) Representative: Szary, Anne Catherine, Dr.

(56) References cited:
- EP-A- 0 376 052
- EP-A- 0 434 848
- FR-A- 1 507 429
- CHEMICAL ABSTRACTS, vol. 116, no. 12, 23 March 1992, Columbus, Ohio, US; abstract no. 107621U, UMEDA ET AL.: 'Glass fiber - reinforced polycarbonate resin compositions.' page 58 ;

## Description

This invention relates to thermoplastic blends of polysiloxane-polycarbonate block copolymers with carbonate polymers, useful as engineering thermoplastics with improved impact strength and processability.

Condensation copolymers having polysiloxane and polycarbonate blocks are known. Representative of such polymers are those disclosed by Schmidt et al., U. S. Pat. 4,681,922 (July 1987), Vaughn, U. S. Pat. 3,189,662 (June 1965) and Vaughn, U. S. Pat. 3,419,634 (Dec. 1968).

The above-described copolymers, while useful, require that a number of different grades, differing in siloxane level, must be manufactured to meet the various market requirements for differing balances of low and high temperature properties. It would be desirable to have means for meeting these diverse requirements by manufacturing only a single grade of siloxane-modified polycarbonate copolymer.

EP-A-0376052 discloses a polycarbonate resin composition excelling in not only impact resistance but also other physical properties comprising 6 to 90% by weight of a polycarbonate/polyorganosiloxane copolymer, 10 to 60% by weight of glass fibers and 0 to 84% by weight of a polycarbonate resin. The amount of the polyorganosiloxane contained in the resin components is in a range of 0.5 to 40% by weight.

GB-A-1175266 discloses arylol polysiloxanes obtained by the addition reaction of a siloxane hydride with an aliphatically unsaturated arylol in the presence of a platinum catalyst without effecting reaction between the hydroxyl radical of the unsaturated arylol and the siloxane hydride.

A highly advantageous feature of the invention is the finding that certain siloxane-carbonate block copolymers can be blended with various proportions of aromatic carbonate polymers to prepare thermoplastic molding compositions capable of meeting the wide range of requirements for high and low temperature properties. These blends also exhibit other useful advantages such as an ease of achieving flame retardancy. By varying the selection of the carbonate polymer and the proportions of blend ingredients, a wide range of properties may be obtained, starting with a single siloxane-carbonate block copolymer.

### SUMMARY OF THE INVENTION

The invention comprises a thermoplastic composition which comprises a blend of:
(A) 5 to 50 weight percent of a thermoplastic block copolymer comprising:
   (1.) 1 to 50 % by weight of a siloxane comprising polysiloxane blocks of the formula: 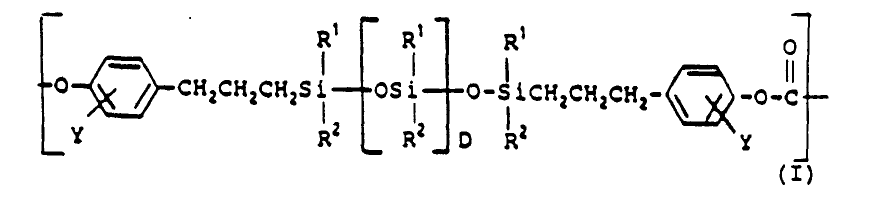 where R¹ and R² are each independently selected from hydrogen, hydrocarbyl and halogen-substituted hydrocarbyl, (preferably R¹ is methyl and R² is methyl or phenyl); D is an integer of from 10 to 120, preferably 40-60, Y is hydrogen or alkoxy (and where alkoxy, preferably methoxy); and
   (2.) 50 to 99 % by weight of the block copolymer of a polycarbonate-block comprising recurring units of the formula: 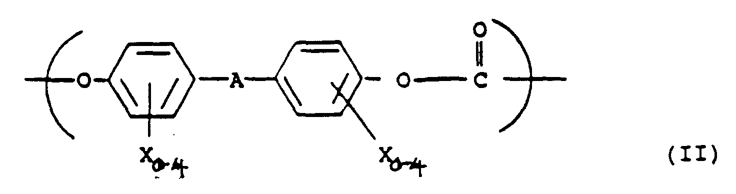 wherein A is a divalent hydrocarbon radical containing from 1 to 15 carbon atoms; a halogen substituted divalent hydrocarbon radical containing from 1 to 15 carbon atoms or a divalent moiety selected from -S-; -SS-; -S(O)-; -S(O)₂-; -O-; or -C-; wherein each X is independently selected from the group consisting of a monovalent hydrocarbon radical such as an alkyl group of from 1 to 8 carbon atoms, an aryl group of from 6-18 carbon atoms, an aralkyl group of from 7 to 14 carbon atoms, an alkaryl group of from 7 to 14 carbon atoms, an alkoxy group of from 1 to 8 carbon atoms, or an aryloxy group of from 6 to 18 carbon atoms and halogen; and(B) from 50 to 95 weight percent of an aromatic carbonate polymer, wherein the proportions of (A) and (B) are such that the siloxane moieties comprise 4 to 8 weight percent of the total blended composition.

Preferably the aromatic carbonate polymer B is a polycarbonate comprising repeating units of the formula 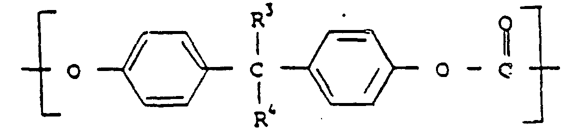 where R³ and R⁴ are independently selected from hydrocarbyl and halogen substituted hydrocarbyl.

In preferred blends R¹, R², R³ and R⁴ are methyl and Y is methoxy.

The term "hydrocarbyl" as used herein means the monovalent moiety obtained upon removal of a hydrogen atom from a parent hydrocarbon. Representative of hydrocarbyl are alkyl of 1 to 25 carbon atoms, inclusive such as methyl, ethyl, propyl, butyl, pentyl, hexyl, heptyl, octyl, nonyl, undecyl, decyl, dodecyl, octadecyl, nonodecyl eicosyl, heneicosyl, docosyl, tricosyl, tetracosyl, pentacosyl and the isomeric forms thereof; aryl of 6 to 25 carbon atoms, inclusive, such as phenyl, tolyl, xylyl, napthyl, biphenyl, tetraphenyl and the like; aralkyl of 7 to 25 carbon atoms, inclusive, such as benzyl, phenethyl, phenpropyl, phenbutyl, phenhexyl, napthoctyl and the like; cycloalkyl of 3 to 8 carbon atoms, inclusive, such as cyclopropyl, cyclobutyl, cyclopentyl, cyclohexyl, cycloheptyl, cyclooctyl and the like.

### DETAILED DESCRIPTION OF THE PREFERRED EMBODIMENTS OF THE INVENTION

The thermoplastic block copolymer (A) may be formed by the interfacial polymerization of a carbonate precursor such as phosgene with
(1) a dihydric phenol of the formula IV shown below;
(2) a siloxane of the formula: 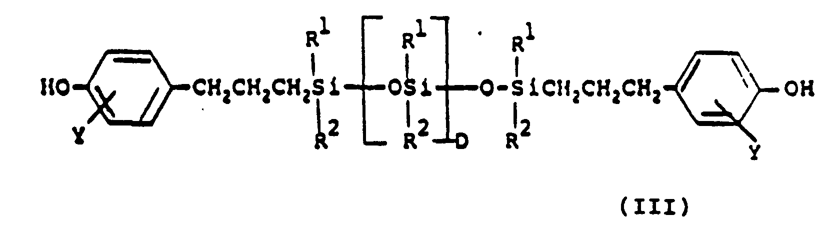 where R¹ and R², D and Y are as defined above;
(3) a chain length limiting amount of a monohydric phenol, preferably phenol itself.

The procedure is the conventional one used to prepare polycarbonates and polyester-carbonates.

The siloxanes (III) may be characterized as bisphenolsiloxanes. The preparation of these bisphenolsiloxanes is accomplished by the addition of a polydiorganosiloxane (V) to a phenol (VI) containing an alkenyl substituent, according to the schematic formula: 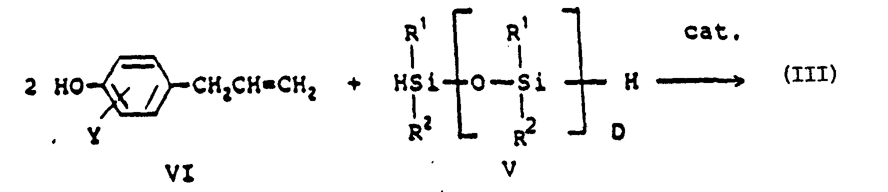 wherein R¹, R², Y and D are as defined above.

The essential features of the process are described by Vaughn, U. S. Pat. 3,419,635 (Dec. 1968), which is incorporated by reference. For instance, the process is exemplified in example 8 of this Vaughn patent which describes the addition of a hydrogen-terminated polydimethylsiloxane to an allylphenol in the presence of a catalytic amount of chloroplatinic acid-alcohol complex at 90-115°C.

The aromatic carbonate polymers B. employed in the blends of the invention encompass polycarbonates as well as polyester-carbonates. The method of preparation of polycarbonates and polyester-carbonates by interfacial polymerization are well known; see for example the details provided in the U.S. Patents 3,028,365; 3,334,154; 3,275,601; 3,915,926; 3,030,331; 3,169,121; 3,027,814; and 4,188,314, all of which are incorporated herein by reference thereto.

In general, the method of interfacial polymerization comprises the reaction of a dihydric phenol with a carbonyl halide (the carbonate precursor).

Although the reaction conditions of the preparative processes may vary, several of the preferred processes typically involve dissolving or dispersing the diphenol reactants in aqueous caustic, adding the resulting mixture to a suitable water immiscible solvent medium and contacting the reactants with the carbonate precursor, such as phosgene, in the presence of a suitable catalyst and under controlled pH conditions. The most commonly used water immiscible solvents include methylene chloride, 1,2-dichloroethane, chlorobenzene, toluene, and the like.

The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like. The preferred process for preparing polycarbonate resins of the invention comprises a phosgenation reaction. The temperature at which the phosgenation reaction proceeds may vary from below 0°C, to above 100°C. The phosgenation reaction preferably proceeds at temperatures of from room temperatures (25°C) to 50°C. Since the reaction is exothermic, the rate of phosgene addition may be used to control the reaction temperature. The amount of phosgene required will generally depend upon the amount of the dihydric phenol and the amount of any dicarboxylic acid also present.

The dihydric phenols employed are known, and the reactive groups are the two phenolic hydroxyl groups. Some of the dihydric phenols are represented by the general formula: 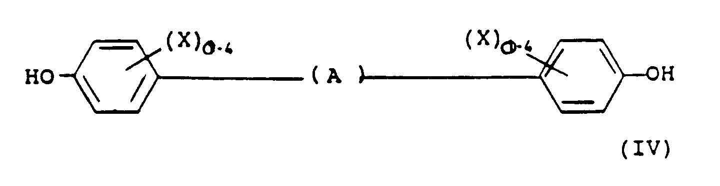 wherein A and X are as defined above.

Typical of some of the dihydric phenols that can be employed in the practice of the present invention are bis-phenols such as (4-hydroxyphenyl)methane, 2,2-bis(4-hydroxyphenyl)propane (also known as bisphenol-A), 2,2-bis(4-hydroxy-3,5-dibromophenyl)propane; dihydric phenol ethers such as bis(4-hydroxyphenyl) ether, bis(3,5-dichloro-4-hydroxyphenyl) ether; dihydroxydiphenyls such as p,p'- dihydroxydiphenyl, 3,3'-dichloro-4,4'-dihydroxydiphenyl; dihydroxyaryl sulfones such as bis(4-hydroxyphenyl) sulfone, bis (3,5-dimethyl-4-hydroxyphenyl) sulfone, dihydroxybenzenes such as resorcinol, hydroquinone, halo- and alkyl-substituted dihydroxybenzenes such as 1,4-dihydroxy-2,5-dichlorobenzene, 1,4-dihydroxy-3-methylbenzene; and dihydroxydiphenyl sulfides and sulfoxides such as bis(4-hydroxyphenyl) sulfide, bis(4-hydroxyphenyl) sulfoxide and bis(3,5-dibromo-4-hydroxyphenyl) sulfoxide. A variety of additional dihydric phenols are available and are disclosed in U.S. Pat. Nos. 2,999,835; 3,028,365 and 3,153,008; all of which are incorporated herein by reference. It is, of course, possible to employ two or more different dihydric phenols or a combination of a dihydric phenol with glycol.

The carbonate precursor can be either a carbonyl halide, a diarylcarbonate or a bishaloformate. The carbonyl halides include carbonyl bromide, carbonyl chloride, and mixtures thereof. The bishaloformates include the bishaloformates of dihydric phenols such as bischloroformates of 2,2-bis(4-hydroxyphenyl)propane, 2,2-bis(4-hydroxy-3,5-dichlorophenyl)propane, hydroquinone, and the like, or bishaloformates of glycols such as bishaloformates of ethylene glycol, and the like. While all of the above carbonate precursors are useful, carbonyl chloride, also known as phosgene, is preferred.

The composition blends of the invention may be modified by the addition of additives known to the art of plastics compounding. Such additives can include for example fillers (such as clay or talc), reinforcing agents (such as glass fibers), impact modifiers, other resins, antistats, plasticizers, flow promoters and other processing aids, stabilizers, colorants, mold release agents, other flame retardants, ultraviolet screening agents, and the like.

In addition to the advantages of improved processing and improved low temperature properties, another important feature of the resin blend compositions of the invention is their ability to produce articles which display good flame ignition resistance and flame retardancy, while at the same time having good impact strength over a wide temperature range. It has hitherto been difficult to achieve both desirable properties at the same time without a degree of compromise. For the purpose of achieving an enhanced degree of flame retardancy, the blends of the invention may be further blended with alkali metal or alkaline earth metal salts of organic sulfonates which may be halogenated, with polycarbonates made with halogenated bisphenols, with halogenated organic molecules, organophosphorus compounds, halogen-phosphorus compounds, polytetrafluoroethylene, fumed silica, and other materials which provide flame ignition resistance (or flame retardancy) to the resin composition and to molded articles made therefrom. Specially preferred compositions of the invention are those that contain an effective flame retardant amount, typically from 0.3 to 0.6 % sulfonate or from 0.5 to 2.0% of halogenated compounds.

The invention will be better understood with reference to the following examples, which are presented for purposes of illustration rather than for limitation, and set forth the best mode contemplated for carrying out the invention.

### Preparation 1

Representative preparation of eugenol capped polydimethylsiloxane fluid:
Octamethylcyclotetrasiloxane (8.3 kg, 28.0 moles), tetramethyldisiloxane (330 g, 2.46 moles) and
Filtrol 20 (86 g, 1% by weight, Harshaw/Filtrol Clay Products) were combined in a 12 L flask and heated to 45 C for 2 hours. The temperature was raised to 100 C and the mixture was rapidly agitated for 5 hours. The mixture was allowed to cool then filtered through a plug of Celite filtering aid. To the crude product was added a mixture of eugenol (774 g, 4.72 moles) and Karstedt's platinum catalyst (1.57 g, 10 ppm Pt) at a rate of 40 g/minute. Reaction completion was monitored by the disappearance of the siloxane hydrogen in the FTIR spectrum. The reaction product was stripped of volatiles using a falling thin film evaporator operating at 200°C and 200 Pa (1.5 torr). The isolated material was a light brown oil with a viscosity of 100 cstokes at 25 C and a degree of polymerization of 49 siloxane units. The material was used without further purification.

### Preparation 2

Representative preparation of the copolymer bisphenol-A (90.7 kg, 398 moles), the D49 eugenol capped polydimethylsiloxane fluid (27.1 kg, 1.5 moles, 20 percent by weight siloxane), triethylamine (1.1 L), phenol (1.4 kg, 14.9 mole) and sodium gluconate (150 g) were combined with water (200 L) and dichloromethane (250 L) in the 1000 L reactor. The biphasic mixture was stirred vigorously and brought to pH 10 by the addition of 50% aqueous sodium hydroxide solution. Phosgene (45.3 kg, 458 moles) was added over the course of 30 minutes with the reaction pH maintained in the range of 10.0 to 10.5. After purging the reaction mixture with nitrogen, additional dichloromethane (200 L) was added and the organic phase was separated from the brine layer by liquid/liquid centrifugation. The organic phase was worked up by washing with 1% aqueous hydrochloric acid solution and water by means of phase to phase contact followed by liquid/liquid centrifuge separation. The resin was isolated as white granules (95 kg) by steam precipitation from the dichloromethane solution. The material was characterized by standard analytical methods. IV 0.47; Gel Permeation Chromatography (polystyrene standard using a K factor to polycarbonate molecular weights) Mw 24023, Mn 10529, Disp 2.28; Melt flow 13 g/10 min. Siloxane content by 1H NMR was 19 wt%.

By similar methods, various other resin compositions are prepared and evaluated with different siloxane degree of polymerization and overall loading of siloxane. Several representative examples of blends of the polysiloxane copolycarbonate are given below.

Materials were compounded with a phosphite stabilizer (0.05 wt.%) and tumbled in a stainless steel can prior to extrusion on a Werner and Pfleiderer 28 or 30 mm co-rotating twin screw extruder operating at 288 to 299°C (550 to 570°F) barrel temperatures. Test specimens were prepared by injection molding at 299°C (570°F) melt temperature and 82°C (180°F) mold temperature.

Notched IZOD impact of single gated bars and unnotched IZOD impact of double gated bars were determined according to ASTM D-256. Flexural yield and flexural modulus were determined according to ASTM D-790. Tensile yield, tensile break and tensile elongation were determined according to ASTM D-638. Melt flow rating was determined by modified ASTM D-1238. Ignition resistance was determined by UL94 test. Example 1. The following compositions were prepared as a means of demonstrating the invention.

A composition of the present invention, 1, was prepared: 25 parts copolycarbonate of bisphenol-A and eugenol capped polydimethylsiloxane with a siloxane degree of polymerization equal to 64 units having 20 weight percent siloxane, 75 parts LEXAN 140 grade polycarbonate resin and appropriate stabilizers.

A composition of the present invention, 2, was prepared: 25 parts copolycarbonate of bisphenol-A and eugenol capped polydimethylsiloxane with a siloxane degree of polymerization equal to 64 units having 20 weight percent siloxane, 75 parts LEXAN-SP 100 grade copolyestercarbonate resin (prepared in accordance with Fontana, et. al. in U. S. Pat. 4,983,706 using 10 weight percent dodecanedioic acid) and appropriate stabilizers.

A composition of the present invention, 3, was prepared: 25 parts copolycarbonate of bisphenol-A and eugenol capped polydimethylsiloxane with a siloxane degree of polymerization equal to 64 units having 20 weight percent siloxane, 75 parts LEXAN-PPC 345 grade aromatic copolyestercarbonate resin (prepared in accordance with Quinn in U. S. Pat. 4,238,596 using 80 weight percent isophthaloyl chloride/terephthaloyl chloride in a 93 to 7 ratio) and appropriate stabilizers.

The materials were compounded, extruded and molded as described above:

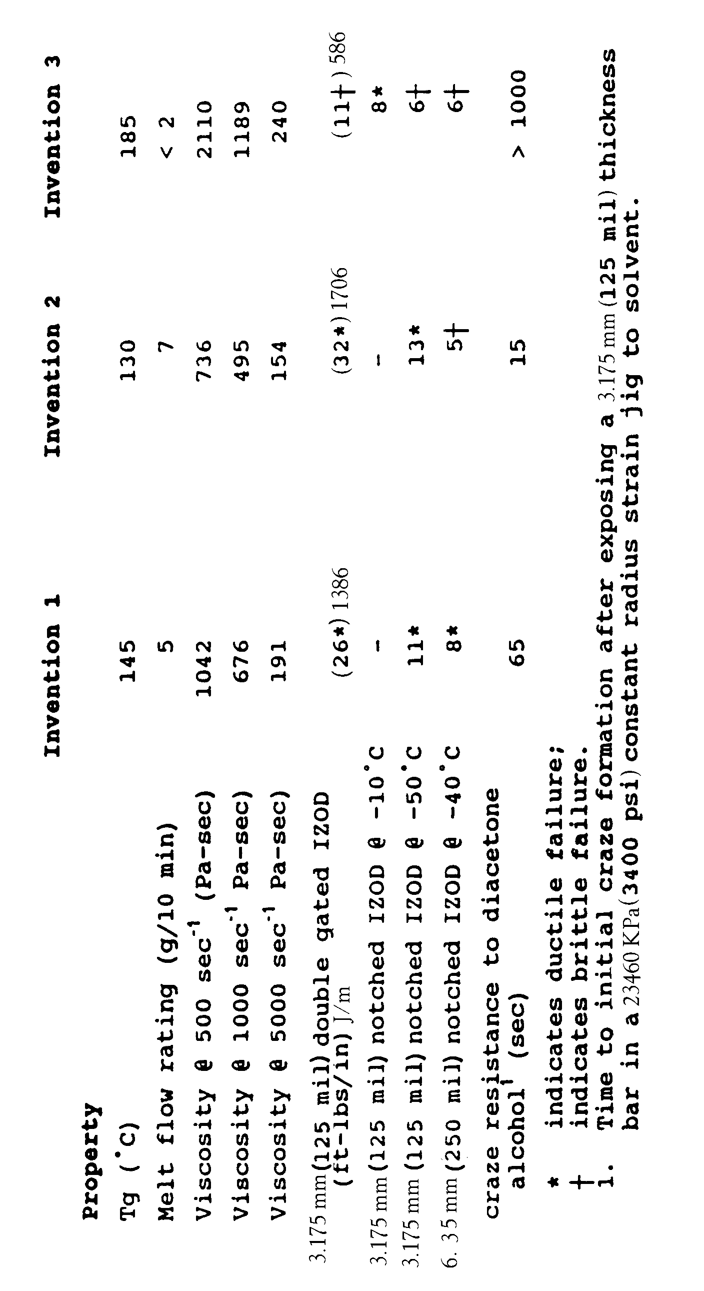

These data indicate the range of properties available from the blend compositions of the invention.
Example 2. Control composition, 4, was prepared: 91.4 parts LEXAN 140 grade polycarbonate resin (GE Plastics), 4.3 parts B56 impact modifier (a methyl methacrylate butadiene styrene core shell copolymer from Kaneka Texas Corporation), 4.3 parts of a copolycarbonate of bisphenol-A and 43 weight percent bisphenol-A capped polydimethylsiloxane with a degree of polymerization of 10 (made by GE in accordance with Merritt, U. S. Pat. 3,832,419), 0.45 parts potassium diphenylsulfone-3-sulfonate (flame retardant), 2.0 parts TIONA RCL-69 titanium dioxide (made by SCM) and appropriate stabilizers.

A composition of the invention, 5, was prepared: 25 parts copolycarbonate of bisphenol-A and eugenol capped polydimethylsiloxane with a siloxane degree of polymerization equal to 100 units having 20 weight percent siloxane, 75 parts LEXAN 120 grade polycarbonate resin, 0.45 parts potassium diphenylsulfone-3- sulfonate (flame retardant), 2.0 parts TIONA RCL-69 titanium dioxide (made by SCM) and appropriate stabilizers.

The materials were compounded, extruded and molded as described above:

| | **Control 4** | **Invention 5** |
|---|---|---|
| **Property** | | |
| Melt flow rating (g/10 min) | 11 | 8.5 |
| Part melt flow rating (g/10 min) | 11 | 8.5 |
| Tensile at break (psi) kPa | (9400) 64860 | (9200) 63480 |
| Tensile at yield (psi) kPa | (8200) 56580 | (8100) 55890 |
| Tensile elongation (%) | 104 | 96 |
| Flexural modulus (psi) MPa | (302300) 2086 | (311600) 2150 |
| Fexural yield (psi) kPa | (11900) 82110 | (12100) 83490 |
| 3.175 mm (125 mil) notched IZOD (ft-lbs/in) J/m | (13*) 693 | (16*) 853 |
| 3.175 mm (125 mil) notched IZOD @ -50 C J/m | (11*) 586 | (12*) 640 |
| 6.35 m (250 mil) notched IZOD (ft-lbs/in) J/m | (12*) 640 | (13*) 693 |
| UL94 at 3.175mm (125 mil) (rating) | B | V0 |

| | | |
|---|---|---|
| * indicates ductile failure | | |

These data show that at approximately similar impact performance, the composition of the invention has superior ignition resistance as measured by UL94.
Example 3. A control composition, 6, was prepared: 100 parts LEXAN 140 grade polycarbonate resin, 0.45 parts potassium diphenylsulfone-3-sulfonate, 1.0 part copolycarbonate of bisphenol-A and tetrabromobisphenol-A, 0.60 parts blend of polytetrafluoroethylene (20%) with bisphenol-A polycarbonate (80%), 2.0 parts TIONA RCL-69 titanium dioxide (made by SCM) and appropriate stabilizers.

A composition of the invention, 7, was prepared: 25 parts copolycarbonate of bisphenol-A and eugenol capped polydimethylsiloxane with a siloxane degree of polymerization equal to 100 units having 20 weight percent siloxane, 75 parts LEXAN 120 grade polycarbonate resin, 0.45 parts potassium diphenylsulfone-3- sulfonate, 1.0 part copolycarbonate of bisphenol-A and tetrabromobisphenol-A, 0.60 parts blend of polytetrafluoroethylene (20%) with bisphenol-A polycarbonate (80%), 2.0 parts TIONA RCL-69 titanium dioxide (made by SCM) and appropriate stabilizers.

A second composition of the invention, 8, was prepared: 40 parts copolycarbonate of bisphenol-A and eugenol capped polydimethylsiloxane with a siloxane degree of polymerization equal to 50 units having 20 weight percent siloxane, 60 parts LEXAN 120 grade polycarbonate resin, 0.45 parts potassium diphenylsulfone-3- sulfonate, 1.0 part copolycarbonate of bisphenol-A and tetrabromobisphenol-A, 1.0 parts blend of polytetrafluoroethylene (20%) with bisphenol-A polycarbonate (80%), 2.0 parts TIONA RCL-69 titanium dioxide (made by SCM) and appropriate stabilizers.

A third composition of the invention, 9, was prepared: 12 parts copolycarbonate of bisphenol-A and eugenol capped polydimethylsiloxane with a siloxane degree of polymerization equal to 10 units having 43 weight percent siloxane, 88 parts LEXAN 120 grade polycarbonate resin, 0.45 parts potassium diphenylsulfone-3- sulfonate, 1.0 part copolycarbonate of bisphenol-A and tetrabromobisphenol-A, 1.2 parts blend of polytetrafluoroethylene (20%) with bisphenol-A polycarbonate (80%), 2.0 parts TIONA RCL-69 titanium dioxide (made by SCM) and appropriate stabilizers.

The materials were compounded, extruded and molded as described above:

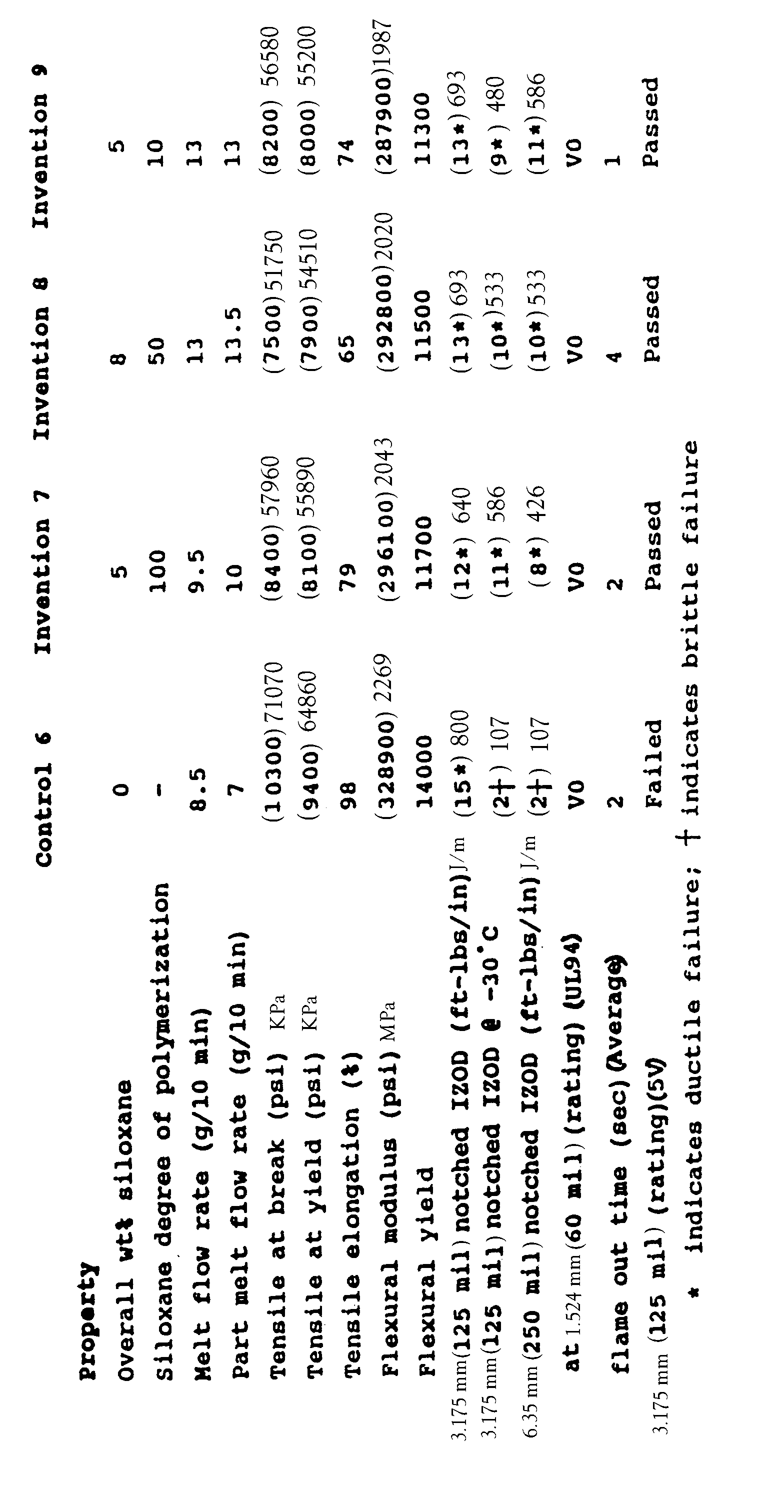

These data show that at comparable ignition resistance performance, the compositions of the invention are superior in impact performance throughout a range of compositions of siloxane degree of polymerization and loading.
Example 4. Control composition, 10, was prepared: 90 parts LEXAN 140 grade polycarbonate resin (GE Plastics), 10 parts chopped glass fibers (Owens Corning Fiberglass 415), 0.45 parts potassium diphenylsulfone-3-sulfonate (flame retardant), 2.0 parts TIONA RCL-69 titanium dioxide (made by SCM) and appropriate stabilizers.

A composition of the invention, 11, was prepared: 25 parts copolycarbonate of bisphenol-A and eugenol capped polydimethylsiloxane with a siloxane degree of polymerization equal to 50 units having 20 weight percent siloxane, 65 parts LEXAN 140 grade polycarbonate resin, 10 parts chopped glass fibers (Owens Corning Fiberglass 415), 0.45 parts potassium diphenylsulfone-3-sulfonate (flame retardant), 2.0 parts TIONA RCL-69 titanium dioxide (made by SCM) and appropriate stabilizers.

The materials were compounded, extruded and molded as described above:

| | **Control 10** | **Invention 11** |
|---|---|---|
| **Property** | | |
| Melt flow rating (g/10 min) | 8 | 7 |
| Part melt flow rating (g/10 min) | 8 | 7 |
| Tensile @ break (psi) kPa | (7100) 48990 | (6300) 43470 |
| Tensile @ yield (psi) kPa | (8800) 60720 | (7200) 49680 |
| Tensile elongation (%) | 15 | 15 |
| Flex modulus (psi) MPa | (397100) 2740 | (326800) 2255 |
| Flex yield | 14100 | 11600 |
| 125 mil notched IZOD (ft-lbs/in) J/m | (2†) 106 | (5*) 267 |
| 250 mil notched IZOD (ft-lbs/in) J/m | (1†) 53 | (4*) 213 |
| UL94 @ 2.286mm (90 mil) (rating) | V2 | V0 |

| | | |
|---|---|---|
| (* indicates ductile failure; | | |
| † indicates brittle failure) | | |

These data indicate that at equal glass fiber loading for dimensional reinforcement the compositions of the invention show superior ignition resistance and impact performance.

## Claims

1. A thermoplastic composition which comprises a blend of :
(A) 5 to 50 weight percent of a thermoplastic block copolymer comprising :
(1.) 1 to 50% by weight of siloxane comprising polysiloxane blocks of the formula : 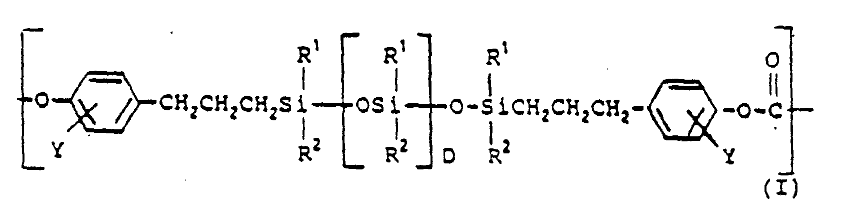 where R¹ and R² are each independently selected from hydrogen, hydrocarbyl and halogen-substituted hydrocarbyl, D is an integer of from 10 to 120; Y is hydrogen or alkoxy; and
(2.) 50 to 99% by weight of the block copolymer of a polycarbonate-block comprising recurring units of the formula : 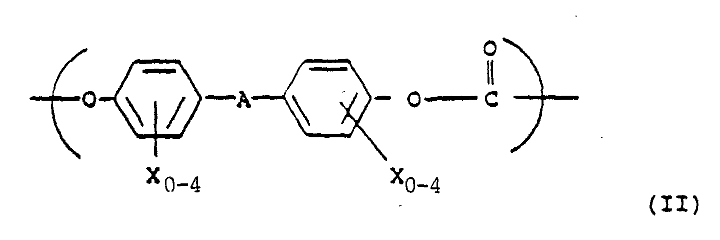 wherein A is a divalent hydrocarbon radical containing from 1 to 15 carbon atoms; a halogen substituted divalent hydrocarbon radical containing from 1 to 15 carbon atoms or a divalent moiety selected from; -S-; -SS-; -S(O)-; -S(O)₂-; -O-; or-C-; each X is independently selected from the group consisting of halogen and a monovalent hydrocarbon radical, and
(B) from 50 to 95 weight percent of an aromatic carbonate polymer, wherein the proportions of thermoplastic copolymer (A) and aromatic carbonate polymer (B) are such that the siloxane moieties comprise 4 to 8 weight percent of the total blended composition.

2. The blend of Claim 1 wherein said aromatic carbonate polymer B. is a polycarbonate comprising repeating units of the formula : 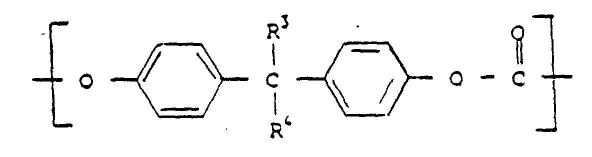 where R³ and R⁴ are independently selected from hydrocarbyl and halogen substituted hydrocarbyl.

3. The blend of Claim 1 wherein said aromatic carbonate polymer is a polyester-carbonate comprising recurring carbonate units of the formula 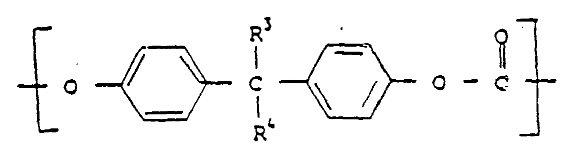 where R³ and R⁴ are selected from the group consisting of hydrocarbyl and halogen-substituted hydrocarbyl, copolycondensed with 1 to 20 mole %, relative to total carbonate and ester units, of recurring ester units of the formula : 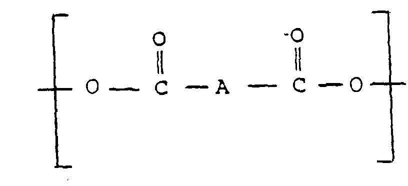 where A is alkylene of 6 to 18 carbon atoms or phenylene.

4. The blend of Claim 3 wherein said alkylene is straight chain alpha-omega alkylene.

5. The blend of Claim 4 wherein said alkylene is hexamethylene.

6. The blend of any preceding claim wherein R¹, R², R³ and R⁴ are methyl and Y is methoxy.

7. The blends of any preceding claim wherein D is 40-60.

8. The composition of Claim 1 which further comprises an effective flame retarding amount of a flame retardant.

9. The composition of Claim 8 wherein there is present from 0.3 to 0.6 percent by weight of an alkali metal or alkaline earth metal salt of an organic sulfonate fire retardant.

10. The composition of Claim 9 wherein the fire retardant is potassium diphenylsulfone-3-sulfonate.

11. The composition of Claim 8 wherein there is present from 0.5 to 2.0 percent by weight of a halogenated fire retardant compound.

## Patentansprüche

1. Thermoplastische Masse, umfassend eine Mischung von:
(A) 5 bis 50 Gew.-% eines thermoplastischen Blockcopolymers umfassend:
(1.) 1 bis 50 Gew.-% Siloxan, umfassend Polysiloxanblöcke der Formel: 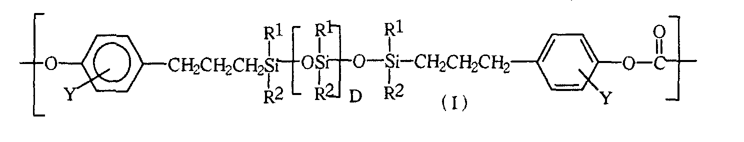 worin R¹ und R² jeweils unabhängig ausgewählt sind aus Wasserstoff, Kohlenwasserstoff und halogen-substituiertem Kohlenwasserstoff, D eine ganze Zahl von 10 bis 120 ist, Y Wasserstoff oder Alkoxy ist und
(2.) 50 bis 99 Gew.-% des Blockcopolymers eines Polycarbonatblockes, umfassend wiederkehrende Einheiten der Formel: 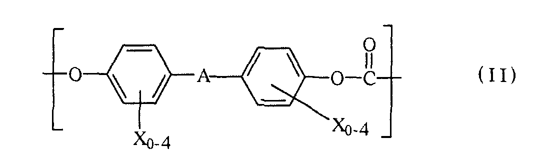 worin A ein zweiwertiger Kohlenwasserstoffrest mit 1 bis 15 Kohlenstoffatomen, ein halogen-substituierter zweiwertiger Kohlenwasserstoffrest mit 1 bis 15 Kohlenstoffatomen oder eine zweiwertige Gruppierung ist, ausgewählt aus -S-, -SS-, -S(O)-, -S(O)₂-, -O- oder -C-, jedes X unabhängig ausgewählt ist aus der Gruppe bestehend aus Halogen und einem einwertigen Kohlenwasserstoffrest und
(B) von 5 bis 95 Gew.-% eines aromatischen Carbonatpolymers, worin die Anteile des thermoplastischen Copolymers (A) und des aromatischen Carbonatpolymers (B) derart sind, dass die Siloxan-Gruppierungen 4 bis 8 Gew.-% der gesamten gemischten Masse umfassen.

2. Mischung nach Anspruch 1, worin das aromatische Carbonatpolymer B ein Polycarbonat mit wiederkehrenden Einheiten der Formel ist: 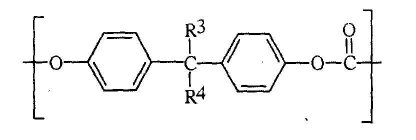 worin R³ und R⁴ unabhängig ausgewählt sind aus Kohlenwasserstoff und halogen-substituiertem Kohlenwasserstoff.

3. Mischung nach Anspruch 1, worin das aromatische Carbonatpolymer ein Polyestercarbonat mit wiederkehrenden Carbonateinheiten der Formel ist: 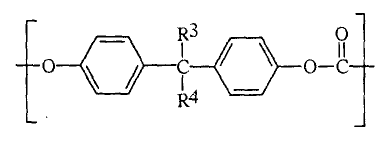 worin R³ und R⁴ ausgewählt sind aus der Gruppe bestehend aus Kohlenwasserstoff und halogen-substituiertem Kohlenwasserstoff, copolykondensiert mit 1 bis 20 Mol-%, mit Bezug auf die gesamten Carbonat- und Ester-Einheiten, von wiederkehrenden Ester-Einheiten der Formel: 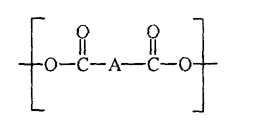 worin A Alkylen mit 6 bis 18 Kohlenstoffatomen oder Phenylen ist.

4. Mischung nach Anspruch 3, worin das Alkylen ein geradkettiges α,ω-Alkylen ist.

5. Mischung nach Anspruch 4, worin das Alkylen Hexamethylen ist.

6. Mischung nach einem vorhergehenden Anspruch, worin R¹, R², R³ und R⁴ Methyl sind und Y Methoxy ist.

7. Mischung nach einem vorhergehenden Anspruch, worin D 40 bis 60 beträgt.

8. Masse nach Anspruch 1, die weiter eine flammhemmende Menge eines Entflammungshemmers umfasst.

9. Masse nach Anspruch 8, worin von 0,3 bis 0,6 Gew.-% eines Alkalimetall- oder Erdalkalimetallsalzes eines organischen Sulfonat-Entflammungshemmers vorhanden sind.

10. Masse nach Anspruch 9, worin der Entflammungshemmer Kaliumdiphenylsulfon-3-sulfonat ist.

11. Masse nach Anspruch 8, worin von 0,5 bis 2,0 Gew.-% einer halogenierten flammhemmenden Verbindung vorhanden sind.

## Revendications

1. Composition thermoplastique qui comprend un mélange de :
(A) 5 à 50 % en poids d'un copolymère à blocs thermoplastique comprenant :
(1) 1 à 50 % en poids de siloxane comprenant des blocs polysiloxane de formule : 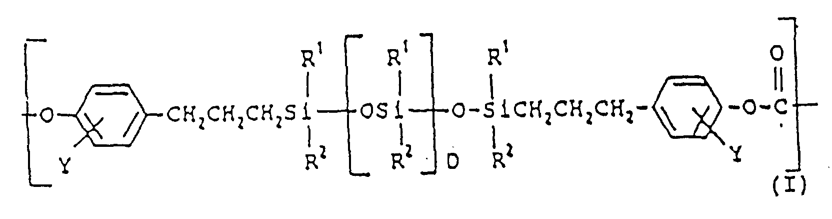 dans laquelle R¹ et R² représentent chacun indépendamment un atome d'hydrogène, un groupe hydrocarbyle ou un groupe hydrocarbyle halogéné, D désigne un nombre entier ayant une valeur de 10 à 120 et Y représente un atome d'hydrogène ou un groupe alcoxy, et
(2) 50 à 99 % en poids de blocs polycarbonate comprenant des motifs de formule : 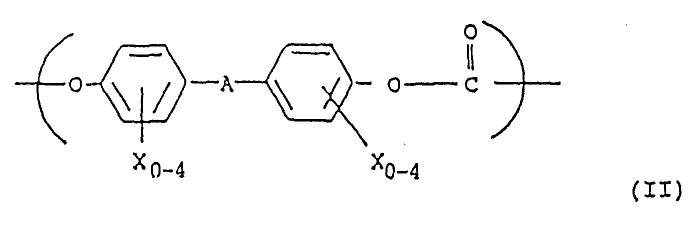 dans laquelle A représente un groupe hydrocarboné divalent, ayant 1 à 15 atomes de carbone, un groupe hydrocarboné halogéné divalent, ayant 1 à 15 atomes de carbone, ou un fragment divalent choisi parmi -S-, -SS-, -S(O)-, -S(O)₂-, -O-, et -C-, et chaque X représente indépendamment un atome d'halogène ou un groupe hydrocarboné monovalent, et
(B) 50 à 95 % en poids d'un polymère à motifs carbonate aromatique,
les proportions du copolymère thermoplastique (A) et du polymère à motifs carbonate aromatique (B) étant telles que les fragments siloxane représentent 4 à 8 % en poids du mélange total.

2. Mélange selon la revendication 1, dans lequel ledit polymère à motifs carbonate aromatique B est un polycarbonate comprenant des motifs de formule : 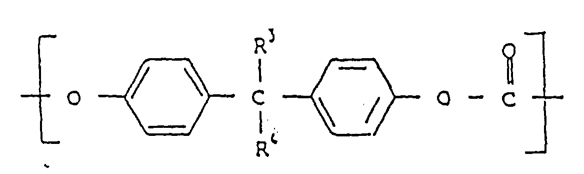 dans laquelle R³ et R⁴ représentent chacun indépendamment un groupe hydrocarbyle ou un groupe hydrocarbyle halogéné.

3. Mélange selon la revendication 1, dans lequel ledit polymère à motifs carbonate aromatique est un polyester-carbonate comprenant des motifs carbonate de formule : 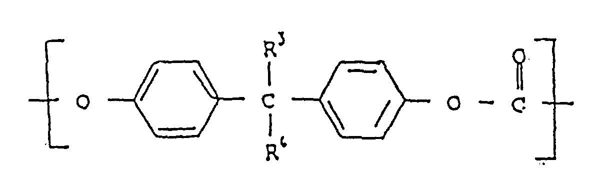 dans laquelle R³ et R⁴ représentent chacun un groupe hydrocarbyle ou un groupe hydrocarbyle halogéné, copolycondensés avec 1 à 20 % en moles, par rapport au nombre total de motifs carbonate et de motifs ester, de motifs ester de formule : 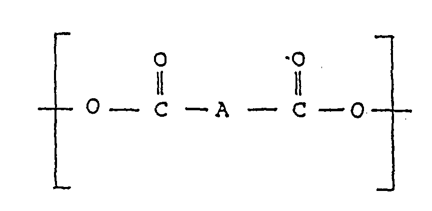 dans laquelle A représente un groupe alkylène ayant 6 à 18 atomes de carbone ou un groupe phénylène.

4. Mélange selon la revendication 3, dans lequel ledit groupe alkylène est un groupe alkylène alpha-oméga à chaîne droite.

5. Mélange selon la revendication 4, dans lequel ledit groupe alkylène est un groupe hexaméthylène.

6. Mélange selon l'une quelconque des revendications précédentes, dans lequel R¹, R², R³ et R⁴ sont des groupes méthyle et Y représente un groupe méthoxy.

7. Mélange selon l'une quelconque des revendications précédentes, pour lequel D est égal à 40 à 60.

8. Composition selon la revendication 1, qui comprend en outre une proportion d'un agent freinant l'inflammation qui est efficace pour freiner l'inflammation.

9. Composition selon la revendication 8, qui renferme 0,3 à 0,6 % en poids d'un sulfonate organique de métal alcalin ou de métal alcalino-terreux en tant qu'agent freinant l'inflammation.

10. Composition selon la revendication 9, dans laquelle l'agent freinant l'inflammation est le diphénylsulfone-3-sulfonate de potassium.

11. Composition selon la revendication 8, qui renferme 0,5 à 2,0 % en poids d'un agent freinant l'inflammation, qui est un composé halogéné.
